# EUROPEAN PATENT SPECIFICATION

(11) **EP 1 446 656 B1**
(45) Date of publication and mention of the grant of the patent: **02.09.2009**
(21) Application number: 02780183.6
(22) Date of filing: 18.11.2002
(51) Int. Cl.: G01N 21/90, G01N 21/93, G06T 5/00, G06T 5/50, G06T 7/00, H04N 7/18

(54) **METHOD AND APPARATUS FOR GENERATING A ROBUST REFERENCE IMAGE OF A CONTAINER AND FOR SELECTING OF A CONTAINER**
VERFAHREN UND GERÄT ZUM ERZEUGEN EINES ROBUSTEN REFERENZBILDES EINES BEHÄLTERS UND ZUM AUSWÄHLEN EINES BEHÄLTERS
PROCEDE ET DISPOSITIF SERVANT A SELECTIONNER UN RECIPIENT

(30) Priority: 16.11.2001 NL 1019381
(43) Date of publication of application: 18.08.2004
(73) Proprietor: Heineken Supply Chain B.V., 2382 PH Zoeterwoude (NL)
(72) Inventor: VAN DER MEER, Dan, NL-2612 KP Delft (NL); AKKERMAN, Jensen, Peter, NL-1271 BV Huizen (NL); VAN DER ZWAAN, Sjoerd, NL-1403 SN Bussum (NL); VAN DE STADT, Arend, NL-1272 NT Huizen (NL); ENDTZ, Frederik, Nico, NL-3054 BE Rotterdam (NL); LANDMAN, Bernardus, Cornelis, Johannes, NL-2771 WR Boskoop (NL)
(74) Representative: van Loon, C.J.J.
(86) International application number: PCT/NL2002/000750
(87) International publication number: WO 2003/042673

(56) References cited:
- EP-A- 0 597 353
- DE-A- 3 228 464
- US-A- 4 859 863
- US-A- 5 245 399
- PATENT ABSTRACTS OF JAPAN vol. 004, no. 122 (P-025), 29 August 1980 (1980-08-29) & JP 55 076942 A (KIRIN BREWERY CO LTD), 10 June 1980 (1980-06-10)

## Description

The present invention relates to systems for selecting containers, comprising steps for detecting aberrations in the exterior of the container. Such systems are important since, in the market for containers such as for instance bottles, such containers with a modern appearance impart a commercial added value to the products supplied therein. Damage or imperfections on such containers will however detract greatly from the high perceived value of the products.

US 4,859,863 discloses a method and apparatus for label inspection on substantially square bottles, which are fed to the inspecting device in a preset orientation. One side or two opposite sides are inspected by an array of 64 (8 times 8) photoconductors. These measure the reflectivity of pixels on the labels and compare this with a preset value. A "LEARN" mode is provided, in which an operator feeds a number of containers into the inspection device, which containers he has himself visually inspected and found acceptable. A sufficient number is fed to be statistically relevant but always selected visually by the operator. The apparatus and method are designed to simulate a casual visual inspection and not to detect every minute flaw. In the method of US4859863 there is only a representation of reflectivity, and only of one or two opposite sides of the containers.

DE 3 228 464 discloses a method and apparatus for optic control of bottles, in which the bottles are rotated over 360° in front of a diode scanner during imaging. This results in rotation of the content as well as of the bottle, which may be detrimental to the images obtained. In this method and apparatus the full periphery of each bottle is imaged and the scanner is moved parallel and synchronously with the rotation of the bottle. No statistically obtained robust reference image is disclosed.

US 5,245,399 discloses a method for optical inspection of colored labels on cylindrical beverage cans. In this method and apparatus optical color scans are made, for example for four colors, which appear in a predetermined field of view of each moving can. A computer is used to first develop a color signature by checking a large number of cans, and then sensing the colors of subsequent scans and comparing these with the generated color signature. In the method of US5245399 only a very limited part of a color signature of a label (and the label only) is collected at each pass of a container, so as to obtain a full image of the label (and the label only) after a large number of containers has passed in different orientations. In the method of US5245399 it is explicitly stated that the need of having to store the data from an entire object scan are eliminated. A diffraction grating is used to separate the different color components of light reflected from the cans, which does not provide a full image of the container but only a color chart of part of the label. In US5245399 an optical head is used, which is constituted by a lens and a prism to separate the different colors.

Containers with a damaged exterior greatly impair the image of the product for the modern consumer. In order to prevent such impairment, it is important that the containers are properly inspected.

In order to enable such an inspection, the present invention provided a method for composing a statistically derived robust reference image or reference image with permissible deviation values of the exterior of a series of substantially round containers, which should be practically identical, such as bottles, comprising the following steps:
- making an image recording of a part of the exterior of a plurality of containers (B, 22) from the series by using a camera (2); wherein the plurality is a quantity of images of container giving sufficient deviation information for approving the normally occurring, acceptable deviations during a selection process of containers,
- processing the recorded images (24, 25, 26) from said parts of said plurality of containers, in order to obtain a first flat representation, wherein the image information is stretched to some extend towards both sides relative to the image information in the centre of the recording;
- composing a complete peripheral view over 360° of the exterior of a reference container (B, 22) on the basis of said recorded images (24, 25, 26) of said parts; and
- determining, on the basis of all recorded images (24, 25, 26) and parameters to be preset, the robust reference image of the container on the basis of which acceptable differences can be taken into account during selection of containers.

Such a robust reference image is preferably obtained by determining, preferably per pixel, a mean value of the image and a mean deviation (standard deviation) thereof; the robust reference image then consists of two parts. It is preferably built up by starting with an image, whereafter subsequent images are automatically added thereto until, for instance after 1000 bottles, the robust reference image is complete. This can hereby take place during normal use of the installation, while the images of bottles in different positions show coherence.

Such a robust reference image, or a reference image with permissible deviation values, is important since printed bottles for instance differ slightly from each other due to for instance the production method. Printed or adhered labels can for instance be shifted somewhat in height or be printed in slightly deformed manner. Such deviations are however no reason for rejection. An apparatus which would not take into account such deviations would however select bottles for rejection if such deviations are observed. According to the present invention a robust reference image, or a reference image with permissible deviation values, is therefore composed in which acceptable deviations are taken into account. Such deviations may comprise damage, size, features or colour differences.

An example of such a method is that a reference image can be formed on the basis of data obtained on the basis of the containers used in practice. In order to manufacture the robust reference image, image recordings are made of for instance at least a thousand containers. Such a quantity gives sufficient deviation information for approving the normally occurring, acceptable deviations during a selection process of containers.

The above described method for composing a robust reference image or reference image with permissible deviation values for the exterior of a series of practically identical containers preferably comprises steps for applying statistical analysis methods in determining the robust reference image. Using such steps it is possible to use standard deviations, or for instance to apply factors to such standard deviations in order to obtain an optimal ratio between acceptance and rejection of containers in a selection process. Such an optimal ratio can for instance be determined on the basis of the cost of the containers in relation to a market value assessment based on the value of high-quality containers as perceived by consumers.

Processing of the recorded image preferably comprises steps for transforming an aspect view of a curved surface to a faithful flat rendition. Using a method according to such a preferred embodiment, the exterior of a container, such as for instance a label arranged thereon or a printing applied thereto, can be compared to the robust reference image or the reference image with the permissible deviation values of the exterior of a series of practically identical containers.

Image recordings are herein made of a part of the side wall of substantially round containers. In practice a readily processable recording is made of for instance 60° of the periphery. A wider recording of for instance 120° is also possible. The theoretically feasible recording of 180° however produces in practice less useful results close to the edges.

In the case of a round container such as a bottle, the robust reference image comprises a faithful flat rendition of the whole side wall over 360°. The recording of for instance 60° which is made in the present embodiment, is fitted onto the corresponding part of the robust reference image after being processed to a faithful flat rendition. A comparison is then made as to whether the similarities fall within the set limit values of the robust reference image, which results in approval of this part-image and thereby the bottle, or that the present image falls outside the tolerances of the robust reference image, which results in rejection of the present bottle.

In a further embodiment use is made of the second representation to compose the robust reference image. This embodiment has the advantage that in the reference image, or in the deviation values included therein, account is taken of data of containers of which recordings are made during the method for selection. During the selection process, the robust reference image is hereby more and more adapted to a series of deviation values to be detected. In statistical terms this means that the sample size on the basis of which deviation values are determined becomes increasingly larger.

In order to obtain a sufficiently high speed (for instance 16 bottles/sec), use is preferably made of a coarse and a fine fitting.

Approval or rejection preferably takes place using distinguishable, parameterized differential measurements, such as colour difference, shape difference (non-roundness and the like) and so on.

The parameters preferably comprise data relating to the container, threshold values relating to colour differences or formats of printing and the like. It is important for the appearance of the container that for instance a printing is placed somewhat at the correct height; variations in the height of the printing will however, within limits, detract little from the appreciation of a container by an end user. Variations therein are therefore allowed. Too rigid an assessment of the height of the printing would therefore result in undesirable rejection. Such undesirable rejection is prevented by taking this into account using this method. The same sort of reasoning applies in relation to for instance colour differences or differences in printing format. Small aberrations herein can occur in large series of containers. By taking account of data relating to large quantities of containers of a series, undesirable rejection, which involves high costs, is prevented.

In order to be able to work in simple manner with containers from different series, a preferred embodiment of the method comprises the possibility of composing profiles comprising the above described data for the purpose of carrying out selections on mutually alternating series of containers matching respective profiles. If such a method is performed using an apparatus for selecting the containers, it is recommended to process different series of containers in efficient manner using one apparatus. These profiles enable simple switching of series, wherein the correct selections are made by applying the profile matching the series.

In a further preferred embodiment the container is illuminated while the recording is made. This has the advantage for instance that a usable recording can be made by applying sufficient light. By applying light of the same intensity and colour in different recordings, it is further possible to make recordings wherein data relating to the colour of the exterior of the container, such as a printing, is kept constant, whereby the forming of a robust reference image or the assessment on the basis of colour aspects of the exterior of the container can be performed with constant quality.

The container is preferably a bottle. Such containers as bottles are very important in a distribution channel for the value perceived by consumers.

In the preferred embodiment the processing speed of the containers is higher than ten containers per second, preferably higher than sixteen containers per second. A high processing speed is important for the manufacturers of products sold in the containers. In practice it is very practical to carry out the method subsequent to filling of containers. Such containers, such as bottles, are filled in a filling line. The method for selecting and building up the robust reference image must then be performed at the same speed as the filling of the bottles. In practice, this speed is becoming increasingly higher.

Particularly in the case of bottles, use is preferably made of skimming light on the top and bottom, wherein the background remains as dark as possible.

A further aspect of the present invention relates to an apparatus for carrying out a method according to any of claims 1-12:
- recording means (2) for making at least one recording (24, 25, 26) of part of a side of the container (B, 22) directed toward the recording means (2), which recording means comprises a camera (2),
- processing means (6) for processing a recorded image (24, 25, 26) in order to obtain a first or second flat representation, which processing means comprise means for stretching the image information to some extend towards both sides, relative to the image information in the centre of the recording,
- transmitting means for transmitting recording data to the processing means (6),
- composing means for composing a complete peripheral view over 360° of the exterior of a reference container (B22), on the basis of said recorded images (24, 25, 26) of said parts.
- comparing means for comparing the second representation to a robust reference image obtained on the basis of parameters to be preset and data from first or second representations
- determining means for determining, on the basis of all recorded images (24, 25, 26) and parameters to be preset, the robust reference image of the container on the basis of which acceptable differences can be taken in to account during selection of containers.

Such an apparatus preferably further comprises composing means for composing, on the basis of first and second representations and/or predetermined parameters, a robust reference image or a reference image with permissible deviation values, on the basis of which image acceptable and/or natural differences between individual containers within a series of containers can be taken into account during selection of containers. Such apparatus embodiments are able to perform an above described method and have at least the above described advantages.

Such an apparatus preferably further comprises ejecting means for ejecting selected containers. Selected containers are in this respect containers which do not conform to the robust reference image, or the reference image with permissible deviation values.

The use of illuminating means and screening means while making the recording increases the quality of the recording.

In the further preferred embodiment the apparatus comprises actuating means for actuating making of a recording when a container is correctly positioned relative to the recording means. An advantage hereof is that a recording is made which is centred as accurately as possible relative to the container. A further advantage is that it is possible to keep track of which container is being assessed.

The apparatus preferably comprises rotating means for rotating the container between the making of two successive recordings. Such an embodiment enables making of a plurality of recordings of one container, whereby on the basis of complete information relating to the exterior of the container it is possible to assess wether it falls within the correct tolerances.

A significant advantage of the present invention relates to the possibility, using differential images, of detecting contaminants such as cigarette ends and the like in bottles with printed, i.e. partly transparent, labels, since the image information of the labels can be filtered out.

Further advantages, features and details of the present invention will be elucidated on the basis of the following description of preferred embodiments thereof with reference to the annexed figures, in which:
- fig. 1 is a schematic side view of an apparatus for selecting a container;
- fig. 2 is a top view of an apparatus as shown in fig. 1;
- fig. 3 is a top view of a further embodiment;
- fig. 4 is a top view of a further embodiment;
- fig. 5 is a schematic view of a representation of a computer screen;
- fig. 6 is a top view of a further embodiment which does not form part of the invention
- fig. 7-9 show flow diagrams of further embodiments which do not form part of the invention.

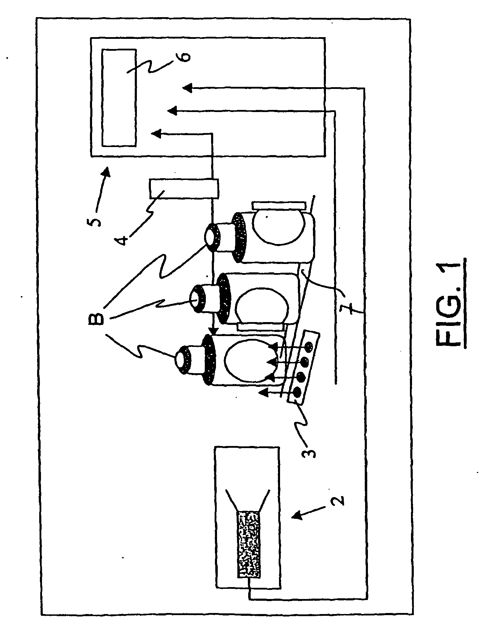

A first embodiment (fig. 1) comprises a camera 2, illuminating means 3, actuator means 4 and a processing computer 6 which is placed in a protective housing 5.
Actuator means 4 serve for making an image recording at the correct moment by means of camera 2. The illuminating means provide illumination of the bottle from the top and/or bottom. In this embodiment the illuminating means are embodied as light-emitting means in the form of for instance a prism or a semicircular cylindrical lens which is connected to a number of light-supplying glass fibre bundles. This embodiment makes it possible to provide a number of adjacent light sources with light by means of one centrally placed light source. The maintenance of such lighting is hereby simple.

The bottles are transported past the lighting and the camera by means of a conveyor 7 (shown schematically). Bottles B are situated in a random orientation relative to the camera. In this embodiment a recording is made by the camera which covers 1/6 of the periphery of the bottle.

In the image processing computer 6 this recording is processed such that an image is obtained as if the periphery of the bottle had been rolled out. For this purpose the image information is stretched to some extent towards both sides of the image recording relative to the image information in the centre of the recording. The thus obtained flat representation is compared to a stored reference image or robust reference image. The method for obtaining this robust reference image is discussed in greater detail hereinbelow. A robust reference image comprises data relating to a plurality of images of bottles. Another manner of describing the robust reference image is that it comprises data relating to one graphic representation of a periphery of a bottle, together with data concerning maximum desired deviations from this ideal reference image. These permitted deviations are related to the desired degree of rejection and the desired quality of the images on the periphery of the container.

In this embodiment the comparing takes place on the basis of creating a differential image, by subtracting the reference image from the flat representation of the recorded image of the bottle for testing. The result of this subtraction is a so-called first differential image D. Using data relating to the mean differential image correction E, a second differential image F is then calculated on the basis of the first differential image D minus the mean differential image correction E.

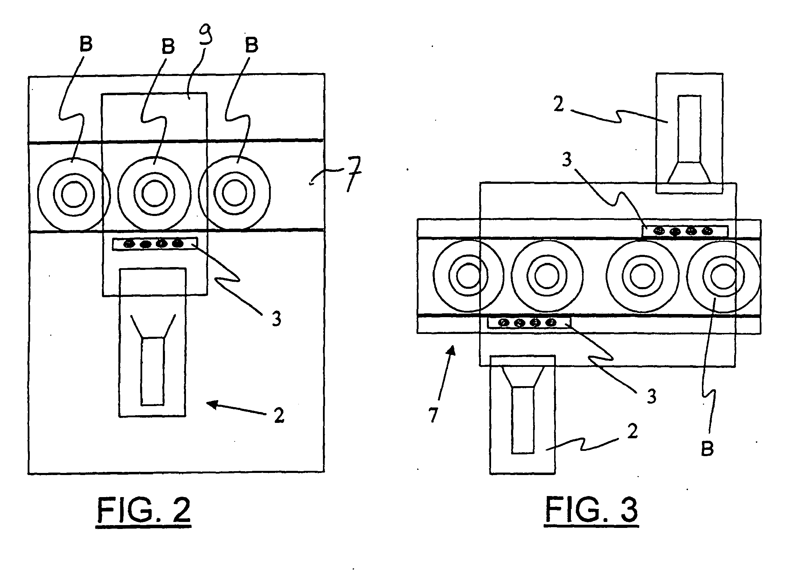

A top view of the embodiment of figure 1 is shown schematically in figure 2. Bottles B on conveyor belt 7 have a pitch distance of the diameter of one bottle. This is important for determining the position of assessed bottles. After the recording of the side walls of the bottles has been made, the rejected bottles are ejected from the conveyor belt. A practical method of ejecting the correct bottle is by knowing the number of transport positions of the bottles between recording of the image and the ejection, and by ejecting the correct bottle on the basis thereof.

Figure 2 further shows schematically a protective cover 9 which screens the bottle at the position of the camera from unpredictable ambient light influences. It is possible here to envisage shadows of passing staff or variations in daylight or other light effects.

A further embodiment according to the present invention is shown in figure 3. Two cameras 2 are herein situated on either side of conveyor belt 7. In this embodiment illuminating means 3 are also situated at the position of the cameras. Since it is possible in this embodiment to make two recordings along two sides of a bottle, the selection of the bottle can be carried out on the basis of twice the amount of data. Where in the first embodiment the selection is carried out on the basis of one image of 60° of the periphery, it is possible in this embodiment to carry out the selection on the basis of 120° of the periphery of the bottle. The chance of bottles being approved erroneously is hereby halved relative to the preceding embodiment.

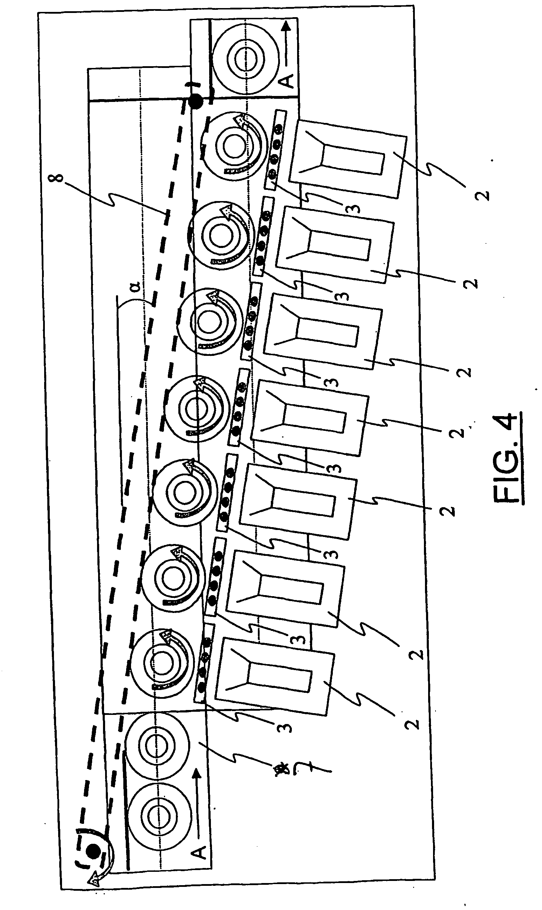

In a further embodiment (fig. 4) a maximum of seven recordings are made of a bottle, and the bottle is rotated about its central axis during this period. The bottles are fed in the direction of arrow A over a conveyor belt 7. At the position of the cameras, the bottles are urged toward a second conveyor belt by means of guide belt 8. The bottles are then discharged on the right-hand side in the direction of arrow A. During this process the bottles are illuminated from the underside by illuminating elements 3, which are similar to the illuminating elements 3 of the embodiments of figures 1-3. Cameras 2 make recordings of the passing bottles. Guide means 8 are arranged at an angle to conveyor belt 7. A bottle is hereby pressed against guide means 8 during the whole of the transport from left to right. The friction between the bottle and guide means 8 brings about rotation of the bottle. The rotation can be influenced by adjusting the relative speed of guide means 8 and the bottle. For this purpose the guide means 8 are embodied as a conveyor which moves in the direction of arrow F.

In this embodiment the resolution of the camera is 640 by 480 pixels. Depending on the desired selection quality, the image quality can be increased to for instance 600 by 800, 1024 by 768 or for instance 1280 by 960 pixels. The resolution of 640 by 480 pixels enables rejection of the bottle on the basis of defects of 2 by 2mm in the exterior of the bottle. If higher camera resolutions are used, it becomes possible to reject smaller deviations. The desirability hereof depends for instance on the cost of rejecting bottles.

Making a recording of the bottle is preferably further actuated by means of a sensor which measures the arrival of the bottle at the position of the neck. The embodiment is further at least suitable for the so-called longneck (XLN) bottle. However, through the above stated use of profiles, an unlimited number of different bottles can be detected using this embodiment.

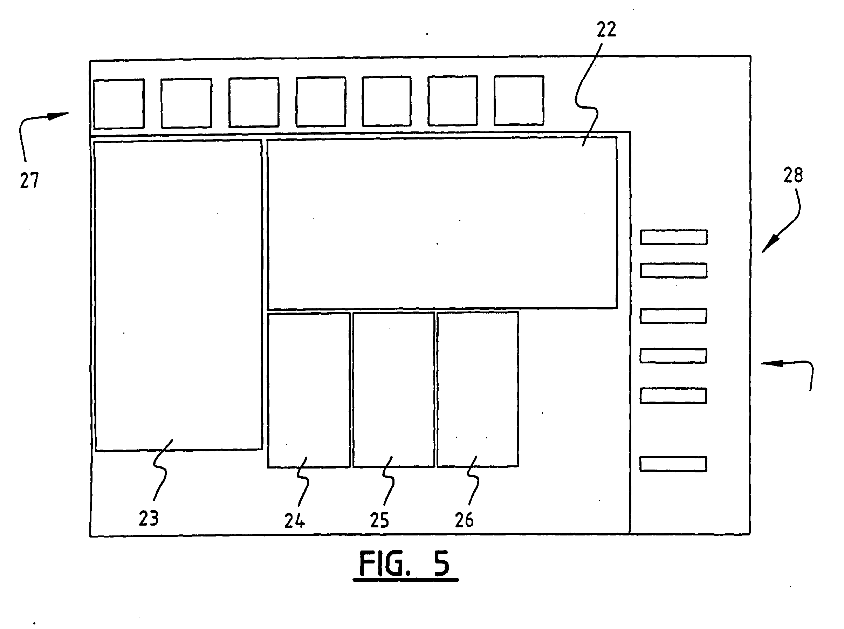

For operation by means of a computer of the above described system, a screen display (fig. 5) of a computer program is shown. At the top are situated several control buttons 27 and on the right-hand side several input fields 28. The large image display area at bottom left provides a rolled-out, complete peripheral view of a bottle 22, several 60° recordings 24, 25, 26 and an image recording 23.

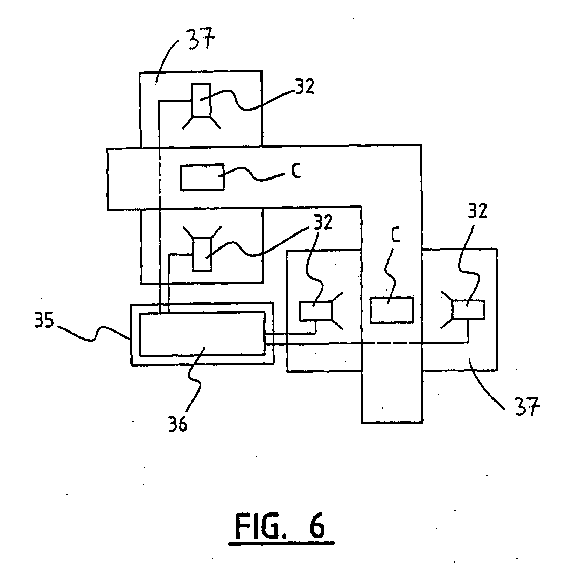

In a further embodiment (fig. 6) which does not form part of the invention crates C are assessed as to their exterior. For this purpose recordings are made beneath screening covers 37 of the side walls of the crate. Recordings are made of both the long sides and the short sides of the crate. The image data of the crate is transmitted from the camera to a processing computer 36 which is placed adjacently of the wall in a robust housing 35.

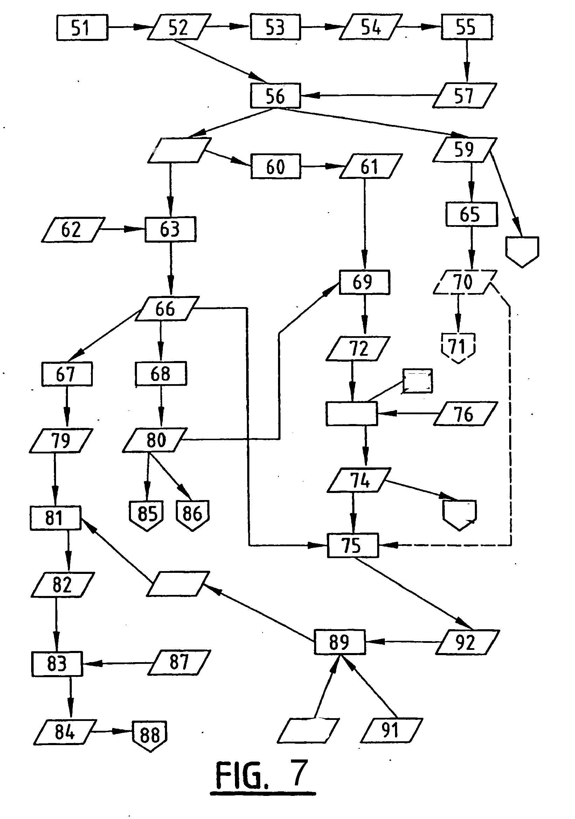

An embodiment which does not form part of the invention is further described hereinbelow on the basis of the inspection of a crate. In step 51 (fig. 7) an image recording is made of a side wall of a crate. The recorded image 52 is used to determine the type of crate in step 53. Data relating to the crate type 54 is used in step 55 to select the settings of the assessment program. This data, the so-called crate profile, or crate role 57, is used in step 56 together with the recorded image to determine the correct part of the crate periphery for the comparison between the recorded image and a reference image. In step 63 the data relating to the image of the crate is compared to the mean reference image 62. Data relating to shift, rotation, shrinkage and/or other geometric deformation of the image are inserted in a transformation vector 66. In step 67 the image is deformed into a reference image. The result is aligned image 79. In step 81 the difference is measured between this aligned image and a cut-out image to be further described. The resulting current differential image 82 is compensated in step 83 on the basis of the mean differential image 87. The result hereof is the compensated differential image 84 which is exported in step 88.

In step 60 an image mask 61 is further produced. In step 68 the shrinkage is extracted from transformation vector 66, which results in shrinkage data 80. This shrinkage data is exported in 85 and 86. On the basis of the shrinkage data and image mask 61, the image mask is compensated for shrinkage 80 in step 69, which results in a compensated label mask 72.

Image data 59 of crate and handgrip further resulting from step 56 are subjected to a positioning measurement in step 65, which results in data relating to a horizontal and/or vertical shift and/or rotation relative to camera 70. This data 70 is exported in 71. This data 70 is further used in the compensating in 69. The compensated image mask 72 is compared to a blanking mask 76. This blanking mask 76 is the reference mask of the label. The resulting arrangement position data of a label on a crate 74 is used in 75 together with transformation vector 66 and the horizontal shift relative to camera 70 to calculate the blanking position 92. This data 92 is exported in 93. In step 89 a reference label is cut out on the basis of the mean reference image 62 and blanking mask (is reference mask) 76, in order to produce reference cut-out label 93.

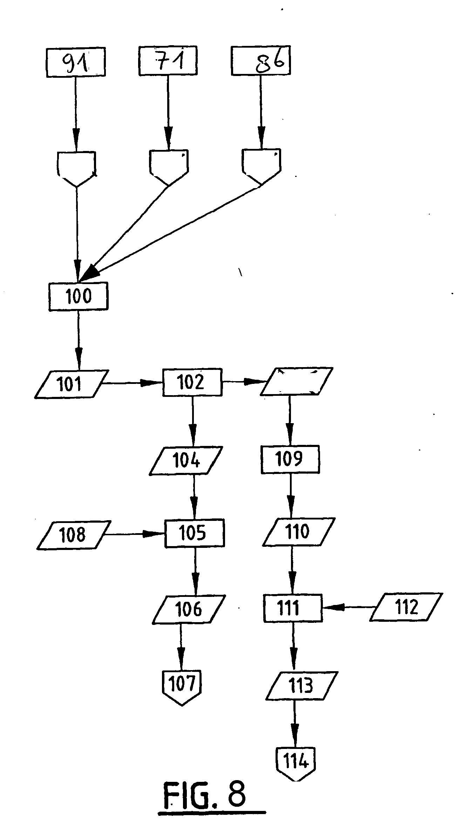

The operation of the inspection of the crate colour and crate handgrip is explained with reference to the method of figure 8. Data 91 and data 71 are added to step 100 together with data 86.

In step 100 image data is compensated for shrinkage and horizontal shifting, which results in a stretched crate and handgrip image 101. In step 102 profile data is selected for the crate and handgrip. In step 105 profile data 104 is used together with data relating to the reference profile of crate 108 in order to measure a colour difference. Colour difference data 106 is exported in 107. Profile data relating to the handgrip resulting from step 102 is segmented to the handgrip in step 109. Handgrip image data 110 resulting from step 109 is processed in step 111 by means of a differential measurement on the basis of reference data 112 of the handgrip. Differential image data 113 relating to the handgrip is exported in 114.

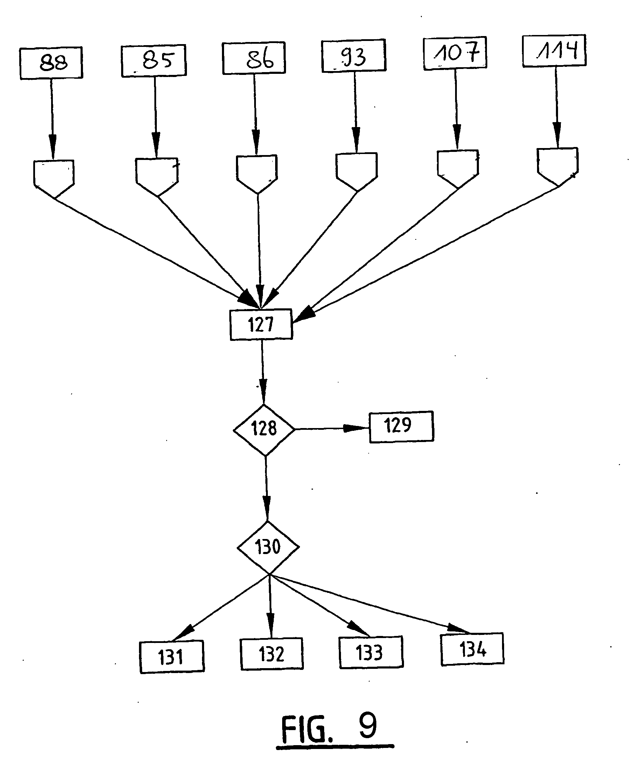

The validation of crate and label is described with reference to figure 9. Data 88, 85, 86, 93, 107 and 114 are inspected in step 127. In step 128 is determined whether the crate is approved. In the case that the crate is not approved, this is shown in step 129. If the crate is approved in step 128, it is determined in step 130 whether the reference data must be updated. A reason herefor is that a deviation relative to the mean reference images is for instance found which does not justify rejection. Such data is then included in the reference images, or reference data in steps 131-134. In step 131 the mean differential image is modified. In step 132 the reference image is modified. In step 133 the crate profile is modified and in step 134 the handgrip profile is modified.

The present invention is not limited to the above described preferred embodiment thereof, the rights sought being rather defined by the following claims, within the scope of which many modifications can be envisaged.

## Claims

1. Method for composing a statistically derived robust reference image or reference image with permissible deviation values of the exterior of a series of substantially round containers, which should be practically identical, such as bottles, comprising the following steps:
- making an image recording of a part of the exterior of a plurality of containers (B, 22) from the series by using a camera (2); wherein the plurality is a quantity of images of container giving sufficient deviation information for approving the normally occurring, acceptable deviations during a selection process of containers,
- processing the recorded images (24, 25, 26) from said parts of said plurality of containers, in order to obtain a first flat representation, wherein the image information is stretched to some extend towards both sides relative to the image information in the centre of the recording;
- composing a complete peripheral view over 360° of the exterior of a reference container (B, 22) on the basis of said recorded images (24, 25, 26) of said parts; and
- determining, on the basis of all recorded images (24, 25, 26) and parameters to be preset, the robust reference image of the container on the basis of which acceptable differences can be taken into account during selection of containers.

2. Method as claimed in claim 1, further comprising steps for applying statistical analysis methods in determining the robust reference image.

3. Method as claimed in claim 1 or 2, wherein processing of the recorded image comprises steps for transforming an aspect view of a curved surface into a faithful flat rendition.

4. Method as claimed in claim 1, 2 or 3, wherein use is made of processing of the recorded images (24, 25, 26) comprising the step of obtaining a second representation which is used to compose the robust reference image.

5. Method as claimed in one or more of the foregoing claims, wherein the parameters comprise data relating to the container (B, 22), threshold values relating to colour differences or formats of printing.

6. Method as claimed in one or more of the foregoing claims wherein profiles are composed, each profile comprising data obtained for different series of containers (B, 22), for carrying out selections on mutually alternating series of containers (B, 22) matching respective profiles.

7. Method as claimed in one or more of the foregoing claims, further comprising steps for illuminating the container (B, 22) while making the recording.

8. Method as claimed in one or more of the foregoing claims, wherein the container is a bottle (B, 22).

9. Method as claimed in claim 8, wherein the bottle (B, 22) is a glass bottle.

10. Method as claimed in claim 8 or 9, wherein the bottle (B, 22) is a beer bottle.

11. Method as claimed in claim 10, wherein the beer bottle (B, 22) is a long neck bottle.

12. Method as claimed in one or more of the foregoing claims, wherein the processing speed is higher than ten containers (B, 22) per second, preferably higher than sixteen containers (B, 22) per second.

13. Apparatus for carrying out a method according to any of claims 1-12:
- recording means (2) for making at least one recording (24, 25, 26) of part of a side of the container (B, 22) directed toward the recording means (2), which recording means comprises a camera (2),
- processing means (6) for processing a recorded image (24, 25, 26) in order to obtain a first or second flat representation, which processing means comprise means for stretching the image information to some extend towards both sides, relative to the image information in the centre of the recording,
- transmitting means for transmitting recording data to the processing means (6),
- composing means for composing a complete peripheral view over 360° of the exterior of a reference container (B22), on the basis of said recorded images (24, 25, 26) of said parts.
- comparing means for comparing the second representation to a robust reference image obtained on the basis of parameters to be preset and data from first or second representations
- determining means for determining, on the basis of all recorded images (24, 25, 26) and parameters to be preset, the robust reference image of the container on the basis of which acceptable differences can be taken in to account during selection of containers.

14. Apparatus as claimed in claim 13, further comprising composing means for composing, on the basis of first and second representations and/or predetermined parameters, a robust reference image or the reference image with permissible deviation values, on the basis of which image acceptable and/or natural differences between individual containers (B, 22) within a series of containers (B, 22) can be taken into account during selection of containers (B, 22).

15. Apparatus as claimed in one or more of the claims 13-14, further comprising ejecting means for ejecting selected containers (B, 22).

16. Apparatus as claimed in one or more of the claims 13-15, further comprising illuminating means (3) for illuminating the container (B, 22) while making the recording.

17. Apparatus as claimed in one or more of the claims 13-16, further comprising screening means (9) for screening the containers (B, 22) from ambient light influences while the recording is being made.

18. Apparatus as claimed in one or more of the claims 13-17, further comprising actuator means (4) for actuating making of a recording when a container (B, 22) is correctly positioned relative to the recording means (2; 70).

19. Apparatus as claimed in one or more of the claims 13-18, wherein a camera (2; 70) is disposed on at least two sides of the container (B, 22).

20. Apparatus as claimed in one or more of the claims 13-19, further comprising rotating means (7, 8) for rotating the container (B, 22) between the making of two successive recordings.

21. Apparatus as claimed in claim 20, wherein the rotating means (7, 8) comprise displacing means (8) for lateral displacement, and friction means for causing rotation in that the container (B, 22) is pressed against the friction means by means (8) of the lateral displacement.

22. Apparatus as claimed in claim 21, wherein the friction means comprise a conveyor belt.

23. Apparatus as claimed in any of the claims 13-21, wherein the containers are transported on a carrousel.

24. Apparatus as claimed in any of the claims 13-23, wherein one or more cameras are disposed in stationary manner relative to transport means for the containers.

## Patentansprüche

1. Verfahren für die Komposition eines statistisch ermittelten stabilen Referenzbildes oder eines Referenzbildes mit zulässigen Abweichungswerten von dem Äußeren einer Reihe von im Wesentlichen runden Behältern, die praktisch identisch sein sollten, wie zum Beispiel Flaschen, umfassend die folgenden Schritte:
- Tätigen einer Bildaufnahme eines Teils des Äußeren einer Vielzahl von Behältern (B, 22) aus einer Serie durch die Verwendung einer Kamera (2); wobei die Vielzahl eine Quantität von Behälterbildern ist, die eine Information über Abweichungen vermittelt, die ausreicht für die Billigung von normal auftretenden, akzeptablen Abweichungen während eines Behälterselektionsprozesses,
- Verarbeitung der von den Teilen der Vielzahl von Behältern aufgenommenen Bilder (24, 25, 26), um eine erste flache Darstellung zu erhalten, wobei die Bildinformation relativ zu der Bildinformation in der Mitte der Aufnahme bis zu einem gewissen Grad in Richtung auf beide Seiten gestreckt wird;
- Zusammensetzen einer kompletten Umfangsansicht über 360° des Äußeren eines Referenzbehälters (B, 22) auf der Grundlage der von den Teilen aufgenommenen Bilder (24, 25, 26); und
- Bestimmen des stabilen Referenzbildes des Behälters, auf dessen Grundlage akzeptable Differenzen bei der Selektion der Behälter berücksichtigt werden können, auf der Basis aller aufgenommenen Bilder (24, 25, 26) und voreinzustellenden Parameter.

2. Verfahren nach Anspruch 1, ferner umfassend Schritte für die Anwendung statistischer Analyseverfahren bei der Bestimmung des stabilen Referenzbildes.

3. Verfahren nach Anspruch 1 oder 2, wobei die Verarbeitung des aufgenommenen Bildes Schritte für die Umwandlung einer Seitenansicht einer gekrümmten Oberfläche in eine originalgetreue flache Wiedergabe umfasst.

4. Verfahren nach Anspruch 1, 2 oder 3, wobei die Verarbeitung der aufgenommenen Bilder (24, 25, 26) genutzt wird, die den Schritt des Herstellens einer zweiten Darstellung umfasst, die für die Komposition des stabilen Referenzbildes verwendet wird.

5. Verfahren nach einem oder mehreren der der vorgehenden Ansprüche, wobei die Parameter Daten, die sich auf Behälter (B, 22) beziehen, Schwellenwerte, die sich auf Farbunterschiede beziehen, oder Druckformate umfassen.

6. Verfahren nach einem oder mehreren der vorgehenden Ansprüche, wobei Profile zusammengesetzt werden, deren jedes Daten umfasst, die für verschiedene Serien von Behältern (B, 22) erfasst werden, um an einander abwechselnden Serien von Behältern (B, 22) Selektionen durchzuführen, indem die jeweiligen Profile abgeglichen werden.

7. Verfahren nach einem oder mehreren der vorhergehenden Ansprüche, ferner umfassend Schritte für die Beleuchtung der Behälter (B, 22) während der Aufnahme.

8. Verfahren nach einem oder mehreren der vorhergehenden Ansprüche, wobei der Behälter eine Flasche (B, 22) ist.

9. Verfahren nach Anspruch 8, wobei die Flasche (B, 22) eine Glasflasche ist.

10. Verfahren nach Anspruch 8 oder 9, wobei die Flasche (B, 22) eine Bierflasche ist.

11. Verfahren nach Anspruch 10, wobei die Bierflasche (B, 22) eine Langhalsflasche ist.

12. Verfahren nach einem der vorhergehenden Ansprüche, wobei die Verarbeitungsgeschwindigkeit höher als zehn Behälter (B, 22) pro Sekunde und vorzugsweise höher als sechzehn Behälter (B, 22) pro Sekunde ist.

13. Vorrichtung zur Durchführung eines Verfahrens nach einem der Ansprüche 1 bis 12, umfassend:
- Aufnahmemittel (2) zur Herstellung von zumindest einer Aufnahme (24, 25, 26) von einem Teil einer Seite eines Behälters (B, 22), die dem Aufnahmemittel zugewandt ist, wobei das Aufnahmemittel eine Kamera (2) umfasst,
- Verarbeitungsmittel (6) für die Verarbeitung eines aufgenommenen Bildes (24, 25, 26) zur Gewinnung einer ersten oder zweiten flachen Wiedergabe, wobei die Verarbeitungsmittel Einrichtungen zum Strecken der Bildinformation relativ zur Bildinformation in der Mitte der Aufnahme bis zu einem gewissen Grad in Richtung auf beide Seiten umfassen,
- Übertragungsmittel zur Übertragung von Aufnahmedaten zu dem Verarbeitungsmittel (6),
- Kompositionsmittel zur Komposition einer kompletten Umfangsansicht über 360° des Äußeren eines Referenzbehälters (B22) auf der Grundlage der von den Teilen aufgenommenen Bilder (24, 25, 26),
- Vergleichsmittel zum Vergleichen der zweiten Darstellung mit einem stabilen Referenzbild, das auf der Grundlage von voreinzustellenden Parametern und Daten von der ersten und der zweiten Darstellung erstellt wurde,
- Bestimmungsmittel zum Bestimmen des stabilen Referenzbildes des Behälters, auf dessen Grundlage bei der Selektion der Behälter akzeptable Differenzen berücksichtigt werden können, auf der Basis von allen aufgenommenen Bildern (24, 25, 26) und voreinzustellenden Parametern.

14. Vorrichtung nach Anspruch 13, ferner umfassend Kompositionsmittel zur Komposition eines stabilen Referenzbildes oder der Referenzbilder mit zulässigen Abweichungswerten, auf deren Grundlage bildakzeptierbare und/oder natürliche Differenzen zwischen einzelnen Behältern (B, 22) innerhalb einer Serie von Behältern (B, 22) bei der Selektion von Behältern berücksichtigt werden können, auf der Basis einer ersten oder zweiten Darstellung und/oder vorgegebener Parameter.

15. Vorrichtung nach einem oder mehreren der Ansprüche 13-14, ferner umfassend Auswurfmittel zur Auswerfen von ausgewählten Behältern (B, 22).

16. Vorrichtung nach einem oder mehreren der Ansprüche 13-15, ferner umfassend Beleuchtungsmittel (3) zur Beleuchtung der Behälter (B, 22) während der Herstellung der Aufnahme.

17. Vorrichtung nach einem oder mehreren der Ansprüche 13-16, ferner umfassend Abschirmmittel (9) zum Abschirmen der Behälter (B, 22) gegenüber umgebenden Lichteinflüssen während der Aufnahme.

18. Vorrichtung nach einem oder mehreren der Ansprüche 13-17, ferner umfassend Betätigungsmittel (4) zum Tätigen einer Aufnahme, wenn ein Behälter (B, 22) relativ zu dem Aufnahmemittel (2; 70) korrekt positioniert ist.

19. Vorrichtung nach einem oder mehreren der Ansprüche 13-18, wobei eine Kamera (2; 70) auf mindestens zwei Seiten des Behälters (B, 22) angeordnet ist.

20. Vorrichtung nach einem oder mehreren der Ansprüche 13-19, ferner umfassend Rotationsmittel (7, 8) zum Drehen der Behälter (B, 22) zwischen zwei aufeinanderfolgend getätigten Aufnahmen.

21. Vorrichtung nach Anspruch 20, wobei die Rotationsmittel (7, 8) ein Bewegungsmittel (8) für eine seitliche Bewegung und Friktionsmittel umfassen, die eine Drehung bewirken, indem der Behälter (B, 22) durch die Mittel (8) für die seitliche Bewegung an die Friktionsmittel gedrückt wird.

22. Vorrichtung nach Anspruch 21, wobei die Friktionsmittel ein Förderband umfassen.

23. Vorrichtung nach einem der Ansprüche 13-21, wobei die Behälter auf einem Karussell transportiert werden.

24. Vorrichtung nach einem der Ansprüche 13-23, wobei eine oder mehrere Kameras relativ zu dem Transportmittel für die Behälter stationär angeordnet sind.

## Revendications

1. Procédé pour composer une image de référence fiable obtenue statistiquement ou une image de référence avec des valeurs d'écart admissibles de l'extérieur d'une série de récipients sensiblement ronds, qui doivent être pratiquement identiques, tels que des bouteilles, comprenant les étapes suivantes :
- effectuer un enregistrement d'image d'une partie de l'extérieur d'une pluralité de récipients (B, 22) parmi la série en utilisant un appareil photographique (2) ; dans laquelle la pluralité est une quantité d'images de récipient donnant des informations d'écart suffisantes pour approuver les écarts acceptables survenant normalement pendant un procédé de sélection de récipients,
- traiter les images enregistrées (24, 25, 26) à partir desdites parties de ladite pluralité de récipients, afin d'obtenir une première représentation plate, dans laquelle les informations d'images sont étirées dans une certaine mesure vers les deux côtés par rapport aux informations d'images au centre de l'enregistrement ;
- composer une vue périphérique complète sur 360° de l'extérieur d'un récipient de référence (B, 22) sur la base desdites images enregistrées (24, 25, 26) desdites parties ; et
- déterminer, sur la base de toutes les images enregistrées (24, 25, 26) et des paramètres devant être prédéterminés, l'image de référence fiable du récipient sur la base de laquelle des différences acceptables peuvent être prises en compte pendant la sélection des récipients.

2. Procédé selon la revendication 1, comprenant en outre des étapes pour appliquer des méthodes d'analyse statistique pour déterminer l'image de référence fiable.

3. Procédé selon les revendications 1 ou 2, dans lequel le traitement de l'image enregistrée comprend les étapes pour transformer une vue d'aspect d'une surface incurvée en un rendu plat fidèle.

4. Procédé selon la revendication 1, 2 ou 3, dans lequel il est fait utilisation du traitement des images enregistrées (24, 25, 26) comprenant l'étape d'obtention d'une deuxième représentation utilisée pour composer l'image de référence fiable.

5. Procédé selon l'une quelconque des revendications précédentes, dans lequel les paramètres comprennent des données concernant le récipient (B, 22), des valeurs de seuil concernant les différences de couleur ou les formats d'impression.

6. Procédé selon l'une quelconque des revendications précédentes, dans lequel des profils sont composés, chaque profil comprenant les données obtenues pour différentes séries de récipients (B, 22), pour réaliser des sélections sur les séries mutuellement alternées de récipients (B, 22) correspondant aux profils respectifs.

7. Procédé selon l'une quelconque des revendications précédentes, comprenant également des étapes d'éclairage du récipient (B, 22) pendant la réalisation de l'enregistrement.

8. Procédé selon l'une quelconque des revendications précédentes, dans lequel le récipient est une bouteille (B, 22).

9. Procédé selon la revendication 8, dans lequel la bouteille (B, 22) est une bouteille en verre.

10. Procédé selon la revendication 8 ou 9, dans lequel la bouteille (B, 22) est une bouteille de bière.

11. Procédé selon la revendication 10, dans lequel la bouteille de bière (B, 22) est une bouteille à goulot allongé.

12. Procédé selon l'une quelconque des revendications précédentes, dans laquelle la vitesse de traitement est supérieure à dix récipients (B, 22) par seconde, de préférence supérieure à seize récipients (B, 22) par seconde.

13. Appareil pour mettre en oeuvre un procédé selon l'une quelconque des revendications 1 à 12 comprenant :
- un moyen d'enregistrement (2) pour réaliser au moins un enregistrement (24, 25, 26) d'une partie d'un côté du récipient (B, 22) dirigée vers le moyen d'enregistrement (2), ledit moyen d'enregistrement comprenant un appareil photographique (2) ;
- un moyen de traitement (6) pour traiter une image enregistrée (24, 25, 26) de façon à obtenir une première ou une deuxième représentation plate, ledit moyen de traitement comprenant un moyen pour étirer les informations d'image dans une certaine mesure vers les deux côtés, par rapport aux informations d'image au centre de l'enregistrement ;
- un moyen de transmission pour transmettre les données d'enregistrement au moyen de traitement (6) ;
- un moyen de composition pour composer une vue périphérique complète sur 360° de l'extérieur d'un récipient (B, 22) de référence, sur la base desdites images enregistrées (24, 25, 26) desdites parties ;
- un moyen de comparaison pour comparer la deuxième représentation à une image de référence fiable obtenue sur la base des paramètres devant être prédéterminés, et des données des première et deuxième représentations ;
- un moyen de détermination pour déterminer, sur la base de toutes les images enregistrées (24, 25, 26) et des paramètres devant être prédéterminés, l'image de référence fiable du récipient sur la base de laquelle les différences acceptables peuvent être prises en compte pendant la sélection des récipients.

14. Appareil selon la revendication 13, comprenant également un moyen de composition pour composer, sur la base des première et deuxième représentations et/ou des paramètres prédéterminés, une image de référence fiable ou l'image de référence avec des valeurs d'écart admissibles, sur la base desquelles les différences acceptables et/ou naturelles entre les récipients (B, 22) individuels dans une série de récipients (B, 22) peuvent être prises en compte pendant la sélection des récipients (B, 22).

15. Appareil selon l'une quelconque des revendications 13 et 14, comprenant également des moyens d'éjection pour éjecter les récipients (B, 22) sélectionnés.

16. Appareil selon l'une quelconque des revendications 13 à 15, comprenant également un moyen d'éclairage (3) pour éclairer le récipient (B, 22) pendant la réalisation de l'enregistrement.

17. Appareil selon l'une quelconque des revendications 13 à 16, comprenant également un moyen de protection (9) pour protéger les récipients (B, 22) contre l'influence de la lumière ambiante pendant que l'enregistrement est en cours.

18. Appareil selon l'une quelconque des revendications 13 à 17, comprenant également un moyen de déclenchement (4) pour déclencher la réalisation d'un enregistrement quand un récipient (B, 22) est correctement positionné par rapport au moyen d'enregistrement (2 ; 70).

19. Appareil selon l'une quelconque des revendications 13 à 18, dans lequel un appareil photographique (2 ; 70) est disposé sur au moins deux côtés du récipient (B, 22).

20. Appareil selon l'une quelconque des revendications 13 à 19, comprenant également un moyen de rotation (7, 8) pour faire tourner le récipient (B, 22) entre la réalisation de deux enregistrements successifs.

21. Appareil selon la revendication 20, dans lequel le moyen de rotation (7, 8) comprend un moyen de déplacement (8) pour le déplacement latéral, et un moyen de frottement pour causer la rotation étant donné que le récipient (B, 22) est appuyé contre le moyen de frottement par le moyen (8) de déplacement latéral.

22. Appareil selon la revendication 21, dans lequel le moyen de frottement comprend une bande de transporteur.

23. Appareil selon l'une quelconque des revendications 13 à 21, dans lequel les récipients sont transportés sur un carrousel.

24. Appareil selon l'une quelconque des revendications 13 à 23, dans lequel un ou plusieurs appareils photographiques sont disposés de manière stationnaire par rapport au moyen de transport pour les récipients.
